Europäisches Patentamt

European Patent Office

Office européen des brevets

(19)

(11) Publication number: **0 044 336**
**B1**

(12) **EUROPEAN PATENT SPECIFICATION**

(45) Date of publication of patent specification: **09.05.84**

(51) Int. Cl.³: **B 21 C 37/29, B 21 D 39/04**

(21) Application number: **81900459.9**

(22) Date of filing: **29.01.81**

(86) International application number:
**PCT/FI81/00007**

(87) International publication number:
**WO 81/02119 06.08.81 Gazette 81/19**

(54) **A FLANGE FORMING DRILL MEANS.**

(30) Priority: **30.01.80 FI 800279**

(43) Date of publication of application:
**27.01.82 Bulletin 82/4**

(45) Publication of the grant of the patent:
**09.05.84 Bulletin 84/19**

(84) Designated Contracting States:
**AT CH DE FR GB LI NL SE**

(56) References cited:
**DE - A - 2 434 498**
**FI - B - 50 843**
**US - A - 3 592 038**
**US - A - 3 844 149**

(73) Proprietor: **G.A. SERLACHIUS OY**
**F-35800 Mänttä (FI)**

(72) Inventor: **LARIKKA, Leo**
**Palosaarentie 13-17 A 7**
**SF-65200 Vaasa 20 (FI)**

(74) Representative: **Lorenz, Eduard**
**Rechtsanwälte Eduard Lorenz - Bernhard Seidler**
**Margrit Seidler - Dipl.-Ing. Hans-K. Gossel Dr. Ina**
**Philipps - Dipl.-Chem. Rainer Wulf**
**Widenmayerstrasse 23**
**D-8000 München 22 (DE)**

Courier Press, Leamington Spa, England.

# Description

The invention relates to a flange forming drill means for drilling a hole through the side of a pipe or the like and for forming a hole encircling flange, said means being provided with a drill rod mountable on a rotating machine and fitted with a drill bit and associated forming members which, after the hole has been drilled, can be extended down below the edges of the hole by turning an adjustment member fitted around the drill rod, the drill rod being provided with an adjustment member, which can be secured to the drill rod by a locking means in various angular locking positions one of which corresponds to the drilling position and the other corresponding to the flange forming position.

A flange forming drill means disclosed in US—A—3 592 038 has proven itself very useful when a flanged hole is to be formed on the side of a pipe e.g. for the connection of a branch pipe. For locking the forming members either in the extended flange forming position or in the retracted hole drilling position, it is necessary that the adjustment member can be locked in various angular positions around the drilling axis.

A flange forming drill means as set forth above is known from FI—B—50843 and discloses a locking means, which can be manually pressed in radial direction thus releasing the locking for manual screwing of the adjustment member. However, such a device is inconvenient to use since one hand must perform two simultaneous crosswise actuating movements, namely pressing the lock in radial direction and turning the adjustment cone 90°. In addition to this inconvenience, the locking means and top ends of the forming pins produce a safety risk, since they project from the adjustment cone and rotate therealong. There is an apparent safety risk, a possibility of injuring the fingers in the forming pins or lock, when the adjustment cone is gripped for the adjustment and the current is accidentally switched on the drill. The risk also exists if the adjustment cone is gripped during so-called postrunning of the drill.

The object of the invention is to improve said type of drill means, so that said operating trouble and safety risks are overcome.

For this purpose the invention is characterized in that the adjustment is enclosed in an externally smooth protective shield, which is in engagement with the adjustment member, so that their relative rotation around the drilling axis is eliminated, and that the locking means is removably locked to the shield thereby connecting the adjustment member to the drill rod.

Thus, the locking can be released e.g. by lifting the shield upwards. This can be achieved by using elements secured to the frame of the drill means, said frame comprising e.g. support legs, which engage the work piece, said elements, after the drilling operation with the drill means being further pressed downwards, leaning against the lower surface of the protective shield thus lifting the shield upwards. The friction force acting between the support elements and the shield turns simultaneously the shield and the adjustment member resulting in the extension of the forming means down below the edges of the hole. Thus, the operation can be automated.

A preferred embodiment of the invention is described in more detail in the following specification with reference made to the accompanying drawings, in which:

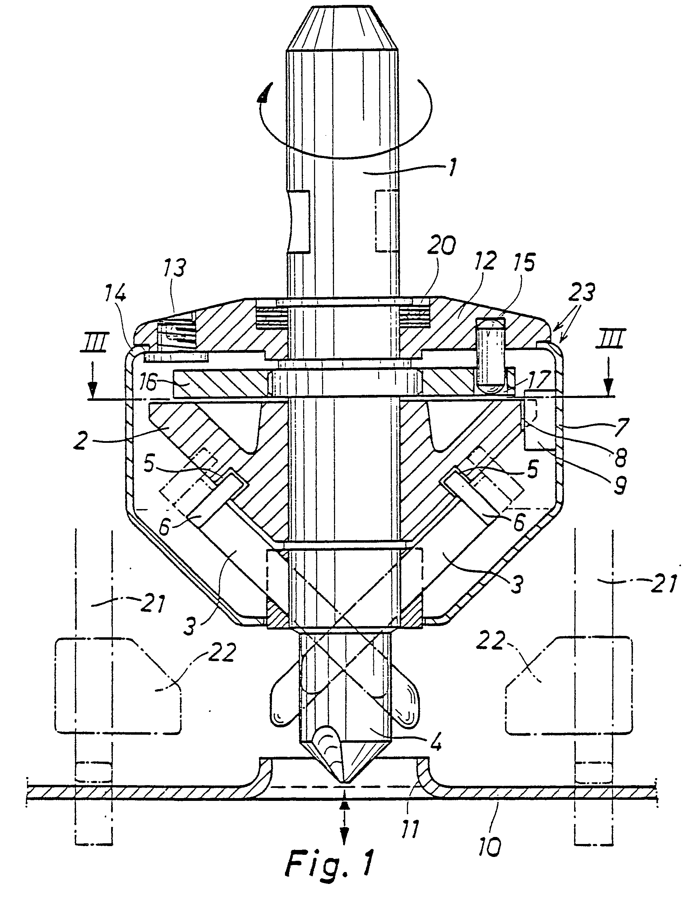

fig. 1 shows the device of the invention in vertical section,
fig. 2 is a plan view of a locking flange which is a part of the invention, and
fig. 3 is a sectional view taken along the line III—III of figure 1.

The drill means comprises a drill rod 1 which can be mounted on a rotating machine and whose lower end comprises a drill bit 4. Around the rod 1 is fitted an adjustment device 2 whose conical lower face has helically pitching guide grooves 5, which receive the gripping extensions 6 at the upper ends of the forming pins 3. The forming pins 3 extend crosswise in the bores running through the drill rod 1 and drill bit 4 and, by turning the adjustment cone 2 said pins can be extended a predetermined distance outside the drill bit 4 jacket or they can be completely retracted within the jacket surface of the drill bit 4. In the latter position the bit 4 is used for drilling a hole through the surface of a pipe 10 and in the former position, i.e. the forming pins 3 extended, a collar flange 11 can be formed by pulling the rotating drill means up from the hole.

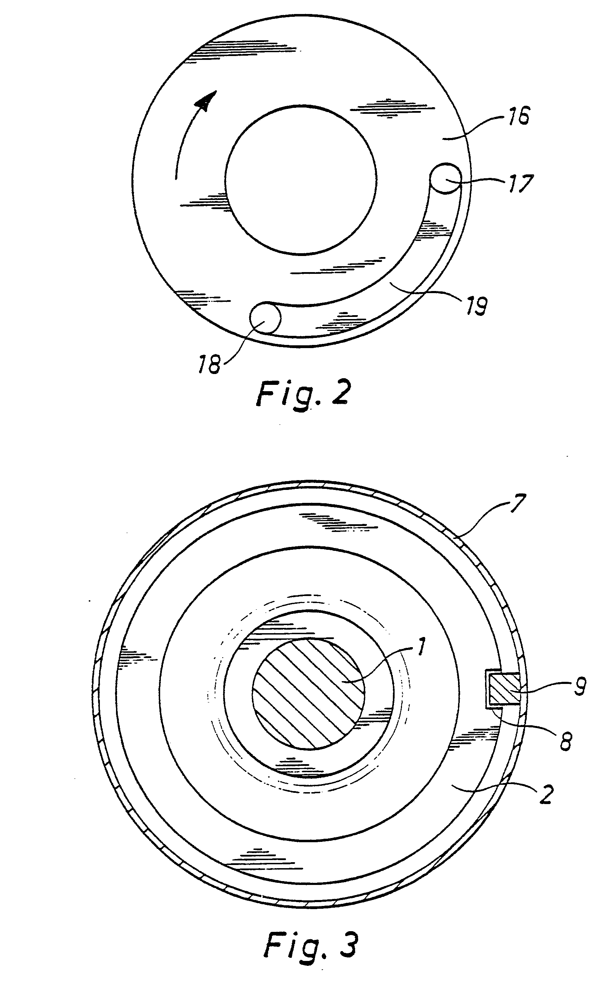

According to the invention, the adjustment cone 2 as well as the upper ends of the pins 3 are enclosed within an externally smooth protective shield 7. A lug 9 fixed on the internal surface of the shield 7 is engaged with a recess 8 in the rim of the adjustment cone 2, which is how their relative rotation around the drilling axis is eliminated. Thus, the adjustment cone 2 turns by turning the protective shield 7. The top of the shield 7 is closed with an externally smooth cover 12 mounted with screws 13 on the bent edge 14 of the shield 7. From the lower face of the cover 12 projects an engagement pin 15 secured to the cover and in engagement with a hole 17 in the locking flange 16. Thus, the forming pins 3 are in the extended position. The locking flange 16 is rigidly secured to the shaft 1 and has also another hole 18 (fig. 2) at a certain angle from the hole 17. Between the holes 17 and 18 extends a groove 19 in which the end of pin 15 can run between its terminal positions defined by the holes 17 and 18. A spring plate 20 urges the cover 12 together with the shield 7 downwards, so that the pin 15 cannot get loose from the hole 17 or 18 by itself. When the forming pins 3 are to be moved from the extended position, presented by the solid line, to the retracted position, shown by the broken lines, the shield 7 is lifted upwards whereby the end of the pin 15 is released from the hole 17 and the shield is turned until the end of the pin 15 reaches the hole 18. In the opposite direction this can be done with the drill means rotating and all there must be done is to lift the shield 7, whereby a friction force applied thereto automatically effects the turning movement from one position to the other. The operation can be automated in such a manner that stopper elements 22 are secured to supporting legs 21 connected with the rotating machine body, which elements, after the hole has been drilled and the drill means is being urged downwards, respond to the conical lower face of the shield 7 and simultaneously effect the uplifting of the shield 7 or release of the locking and also, by the action of the friction, the deceleration of its rotational speed as compared to the drill rod 1 and to the locking flange secured thereto, whereby the forming pins 3 extend out down below the hole edges. In practice, this happens immediately after the hole is drilled through and the face of the shield 7 impinges against the elements 22. The relative axial movement between shield 7 and rod 1 can also be utilized for further automation of the operation in such a way that the upward movement of the shield 7 relative to the shaft 1 and to the rotating machine body acts on an actuator which switches on an auger screw which pulls the drill means upwards. Therefore, all the operator has to do is to actuate the machine and press the hole, the machine will automatically take care of the extension of the forming pins 3 and the initiation of the return feed.

As can be seen, the adjustment cone 2 can be locked on the drill rod 1 by means of a shield 7, cover 12 and locking flange 16. Thus, there is such a special feature to the invention that, by loosening screws 13 and by turning the protective shield 14 and cover 12 relative to each other, it is possible to adjust the distance which the forming pins 3 are extended in one terminal locking position with the pin 15 in the hole 17. Thus, it is possible to set any desired diameter for the flange 11 in the device. If desired, it is naturally possible to make intermediate holes in the groove 19 between the terminal holes 17 and 18 for various flange dimensions. The possibility of turning the sections 7 and 12 relative to each other is particularly intended for adjustment of the tolerance of a predetermined flange dimension, whereby the boundary point 23 between the section 7 and 12 can be provided with a nonius-type of scale.

## Claims

1. A flange forming drill means for drilling a hole through the side of a pipe (10) or the like and forming a hole encircling flange (11), said means being provided with a drill rod (1) mountable on a rotating machine and fitted with a drill bit (4) and associated forming members (3) which, after the hole has been drilled, can be extended down below the edges of the hole by turning an adjustment member (2) fitted around the drill rod (1), the drill rod (1) being provided with an adjustment member (2), which can be secured to the drill rod (1) by a locking means (16) in various angular locking positions one of which corresponds to the drilling position and the other corresponding to the flange forming position, characterized in that the adjustment member (2) is enclosed in an externally smooth protective shield (7), which is in engagement (8, 9) with the adjustment member (2), so that their relative rotation around the drilling axis is eliminated, and that the locking means (16) is removably locked to the shield (7) thereby connecting the adjustment member to the drill rod (1).

2. A flange forming drill means according to claim 1, characterized in that the locking means comprises a locking flange (16) provided with two holes or recesses (17, 18) defining the terminal positions of locking and that the shield (7) is topped with an externally smooth cover (12) whose lower surface is provided with a projecting engagement pin (15), which cooperates with locking holes (17, 18) made on the locking flange (16) and defining the terminal positions of locking.

3. A flange forming drill means according to claims 1 or 2, characterized in that the first and second terminal position of locking are so selected that, during uplifting of the shield (7) rotating in the drilling direction, the frictional force applied thereto turns, after the locking is released, the shield (7) together with its adjustment member (2) from the first terminal locking position to the other.

4. A flange forming drill means according to claim 2, characterized in that the cover (12) and shield (7) can be mounted (13, 14) on each other in various relative angular positions around the drilling axis.

5. A flange forming drill means according to claim 1, characterized in that for the engagement of the shield (7) with the adjustment member (2) the shield (7) is provided with a lug (9) received in a recess (8) in the rim of the conically-shaped adjustment member.

6. A flange forming drill means according to claim 1, characterized in that the shield (7) has partly frustoconical and partly cylindrical jacket surface.

7. A flange forming drill means according to claim 3, characterized in that supporting legs (21) of the drill means are provided with stopper elements (22) against which the shield (7) impinges when the drill is urged downwards and which effect the uplifting of the shield (7) and by frictional action decelerate it with respect to the rotating drill rod (1), whereby the locking shifts from the first terminal position to the other.

## Revendications

1. Dispositif de perçage formant une flange conçu pour percer un trou à travers la paroi d'un tuyau (10) ou objet semblable et pour former une flange (11) entourant un trou, ledit dispositif étant pourvu d'une tige de perçage (1) qui peut être montée sur une machine rotative et équipée d'un fleuret (4), des éléments formants y rattachés (3) qui après que le trou ait été percé peuvent avancés plus bas que les bords du trou en tournant un élément d'ajustage monté autour de la tige de perçage (1), la tige de perçage (1) étant pourvue d'un élément d'ajustage (2) qui peut être bloqué dans la tige de perçage (1) par un dispositif de blocage (16) en différentes positions de blocage angulaires dont une correspond à la position de perçage et l'autre correspondant à la position de formation de la flange, caractérisé par le fait que l'élément d'ajustage (2) est enfermé dans un carter protecteur (7) à surface extérieure lisse qui s'engage (8, 9) dans l'élément d'ajustage (2) de manière à ce que leur rotation relative autour de l'axe de perçage est éliminée et que le dispositif de blocage (16) est bloqué contre le carter (7) de manière à pouvoir être enlevé, reliant ainsi l'élément d'ajustage à la tige de perçage (1).

2. Dispositif de perçage formant une flange selon la revendication 1, caractérisé par le fait que le dispositif de blocage comprend une flange de blocage (16) pourvue de deux trous ou d'enfoncements (17, 18) déterminant les positions terminales de blocage et que le carter (7) est coiffé d'un couvercle (12) à surface extérieure lisse dont la surface inférieure est pourvue d'une cheville (15) d'engagement en saillie qui coopère avec les trous de blocage (17, 18) pratiqués sur la flange de blocage (16) et déterminant les positions terminales de blocage.

3. Dispositif der perçage formant une flange selon les revendications 1 ou 2, caractérisé par le fait que la première et seconde position terminale de blocage est sélectionnée de manière à ce que pendant l'élévation du carter (7) tournant en direction du perçage la force de friction appliquée sur lui tourne, après que le blocage a été lâché, le carter (7) ensemble avec son élément d'ajustage (2) de la première position de blocage terminale à l'autre.

4. Dispositif de perçage formant une flange selon la revendication 2 caractérisé par le fait que le couvercle (12) et le carter (7) peuvent être montés (13, 14) l'un sur l'autre en différentes positions angulaires relatives autour de l'axe de perçage.

5. Dispositif de perçage formant une flange selon la revendication 1 caractérisé par le fait que pour l'engagement du carter (7) avec l'élément d'ajustage (2) le carter (7) est pourvu d'un mentonnet (9) reçu dans un enfoncement (8) dans le bord de l'élément d'ajustage de forme conique.

6. Dispositif de perçage formant une flange selon la revendication 1 caractérisé par le fait que le carter (7) a une enveloppe partiellement troncoconique et partiellement cylindrique.

7. Dispositif de perçage formant une flange selon la revendication 3, caractérisé par le fait que les appuis (21) du dispositif de perçage sont pourvus d'éléments d'arrêt (22) contre lesquels le carter (7) se heurte lorsque le dispositif de perçage est poussé vers le bas et qui provoque la remontée du carter (7) et par la friction le décélère par rapport à la tige de perçage (1) en rotation, action par laquelle le blocage passe de la première position terminale à l'autre.

## Patentansprüche

1. Kragen- oder flanschbildendes Bohrgerät zum Bohren eines Lochs durch die Wand eines Rohrs (10) o.dgl. und zum Ziehen eines das Loch umgebenden Kragens oder Flanschs (11), bestehend aus einer an einer rotationsausübenden Maschine anbringbaren Bohrstange (1) mit daran befindlicher Bohrspitze (4) und Formgebungselementen (3), die nach dem Bohren des Lochs dadurch abwärts unter die Ränder des Lochs führbar sind, daß ein die Bohrstange (1) umgebendes Stellglied (2) gedreht wird, wobei die Bohrstange mit einem Stellglied (2) versehen ist, das sich an der Bohrstange (1) mittels einer Sperreinrichtung (16) in unterschiedlichen Sperrwinkelpositionen festhalten läßt, von denen die eine der Bohrposition entspricht und die andere der Kragenzieherstellung, dadurch gekennzeichnet, daß das Stellglied (2) von einer äußeren glatten Schutzumhüllung (7) umgeben ist, die mit dem Stellglied (2) im Eingriff (8, 9) steht, so daß ihre relative Drehung um die Bohrachse unterbunden ist, und daß die Sperreinrichtung (16) abnehmbar mit der Schutzumhüllung (7) verriegelt ist, wodurch das Stellglied (2) mit der Bohrstange (1) verbunden ist.

2. Kragen- oder flanschbildendes Bohrgerät nach Anspruch 1, dadurch gekennzeichnet, daß die Sperreinrichtung einen Sperrflansch (16) mit zwei Bohrungen oder Ausnehmungen (17, 18) aufweist, die die Verriegelungsendstellungen bestimmen, und daß die Schutzumhüllung (7) durch einen glatten Deckel (12) abgeschlossen ist, dessen Unterseite mit einem vorspringenden Eingriffsstift (15) versehen ist, der mit Sperrlöchern (17, 18) zusammenwirkt, die sich in dem Sperrflansch befinden und die Endstellungen der Verriegelung definieren.

3. Kragen- oder flanschbildendes Bohrgerät nach Anspruch 1 oder 2, dadurch gekennzeichnet, daß die erste und die zweite Endstellung der Verriegelung so gewählt sind, daß während des Anhebens der sich in Bohrrichtung drehenden Schutzumhüllung (7) die dieser zugeführte Reibkraft die Umhüllung (7) nach der Aufhebung der Verriegelung zusammen mit ihrem Stellglied aus der ersten Verriegelungsstellung in die andere dreht.

4. Kragen- oder flanschbildendes Bohrgerät nach Anspruch 2, dadurch gekennzeichnet, daß der Deckel (12) und die Schutzumhüllung (7) in verschiedenen gegenseitigen Winkelstellungen um die Bohrachse herum aufeinandersetzbar sind.

5. Kragen- oder flanschbildendes Bohrgerät nach Anspruch 1, dadurch gekennzeichnet, daß zum Ineinandergreifen der Umhüllung (7) und des Stellglieds (2) die Umhüllung (7) mit einem Ansatz (9) ausgestattet ist, der in eine Ausnehmung (8) in dem Rande des kegelförmigen Stellglieds eintritt.

6. Kragen- oder flanschbildendes Bohrgerät nach Anspruch 1, dadurch gekennzeichnet, daß die Schutzumhüllung (7) eine teils kegelstumpfartige, teils zylindrische Mantelfläche besitzt.

7. Kragen- oder flanschbildendes Bohrgerät nach Anspruch 3, dadurch gekennzeichnet, daß die Stützbeine (21) des Bohrgeräts mit Anschlagelementen (22) versehen sind, gegen die sich die Schutzumhüllung (7) legt, wenn das Bohrgerät abwärts bewegt wird, und die das Anheben der Schutzumhüllung (7) herbeiführen und sie durch Reibungswirkung gegenüber der umlaufenden Bohrstange abbremsen, wodurch die Verriegelung aus der ersten Endlage in die andere Endlage verstellet wird.

0 044 336

Fig. 1

1

Fig. 2

Fig. 3